# EUROPEAN PATENT APPLICATION

(11) **EP 4 390 463 A1**
(43) Date of publication of application: **26.06.2024**
(21) Application number: 22216393.3
(22) Date of filing: 23.12.2022
(51) Int. Cl.: G01T 1/24

(54) **APPARATUS AND METHOD FOR DETECTING X-RAY RADIATION WITH BACKGROUND SUPPRESSION**

(71) Applicant: Universität Hamburg, 20148 Hamburg (DE)
(72) Inventor: Grüner, Florian, 22761 Hamburg (DE); Staufer, Theresa, 22761 Hamburg (DE)
(74) Representative: v. Bezold & Partner Patentanwälte - PartG mbB

(57) **Abstract**

An X-ray detector apparatus 100 for detecting incoming X-ray photons of X-ray radiation to be sensed, comprises an X-ray detector device 10 having an X-ray detector section 11 and an entrance section 12, wherein the X-ray detector section 11 is arranged for detecting the X-ray photons incoming through the entrance section 12 by creating photo electrons in response to an interaction of the incoming X-ray photons with the X-ray detector section 11 and for providing an X-ray output signal, which is determined by the detected X-ray photons, and a background suppression device 20 being configured for suppressing background contributions in the X-ray output signal which are caused by at least one of escape electrons being emitted from the X-ray detector device 10 in response to an absorption of the X-ray radiation and external electrons occurring outside the X-ray detector device 10. Furthermore, an X-ray detection method is described.

## Description

### Field of the invention

The invention relates to an X-ray detector apparatus, being configured for detecting incoming X-ray photons of X-ray radiation to be sensed. Furthermore, the invention relates to an X-ray detection method of detecting X-ray photons of X-ray radiation. The invention also relates to applications of the X-ray detector apparatus and/or the X-ray detection method for X-ray fluorescence imaging of an object under investigation. Applications of the invention are available in particular in the fields of employing X-rays for measuring, imaging, in particular medical imaging, material processing and/or testing purposes.

### Technical background

In the present specification, reference is made to the following prior art illustrating the technical background of the invention:
[1] C. Koernig et al. " In-situ x-ray fluorescence imaging of the endogenous iodine distribution in murine thyroids" in "Scientific Reports" (2022) 12:2903, https://doi.org/10.1038/s41598-022-06786-4;
[2] H. Kahl et al. "Feasibility of Monitoring Tumor Response by Tracking Nanoparticle-Labelled T Cells Using X-ray Fluorescence Imaging-A Numerical Study" in "Int. J. Mol. Sci." 2021, 22, 8736, https://doi.org/10.3390/ijms22168736;
[3] T. Staufer et al. "Assessing Cellular Uptake of Exogenous Coenzyme Q10 into Human Skin Cells by X-ray Fluorescence Imaging" in "Antioxidants" 2022, 11, 1532, https://doi.org/10.3390/antiox11081532;
[4] E. Vergucht et al. "In vivo X-ray elemental imaging of single cell model organisms manipulated by laser-based optical tweezers" in "Scientific Reports" (2015) 5:9049, 10.1038/srep09049;
[5] F. Scholze et al. "Modelling the response function of energy dispersive X-ray spectrometers with silicon detectors" in "X-Ray Spectrom." 38, 312-321, 2009; and
[6] T. Papp "On the response function of solid-state detectors, based on energetic electron transport processes" in "X-Ray Spectrom." 32(6):458 - 469, DOI:10.1002/xrs.672 2003.

It is generally known that X-ray based imaging includes detecting X-ray photons with semiconductor detectors. An X-ray photon absorbed in the semiconductor detector material generates a photo electron, which emits its energy to electron-hole pairs in a cascaded process. The generated electrons are collected with an anode of the semiconductor detector. The number of electron-hole pairs and thus the amplitude of a current output signal of the semiconductor detector is determined by the energy of the absorbed photon. Such semiconductor detectors are by far the most frequently used detectors for measuring X-rays, whether in hospitals, research laboratories, in material science applications, non-destructive testing or at synchrotron facilities.

In X-ray absorption imaging (e.g., in any clinical CT system), the sensitivity of X-ray detection is limited by the ratio of a measured contrast to the statistical noise of the background. X-ray images are in principle noisy, firstly due to finite count statistics (the so-called quantum noise) and secondly due to scattered radiation. In X-ray fluorescence imaging (XRF imaging), a number of signal photons is directly proportional to the mass of the so-called XRF markers in the sample volume covered by the scanning X-ray beam, which excites these markers (e.g. atoms, molecules or nanoparticles) to emit X-ray fluorescence photons. It is generally known from practice that spectral background noise limits the detection sensitivity of XRF imaging within the signal energy region in the measured X-ray spectrum. Up to now, it is assumed that the background noise occurs due to the multiple scattering of the X-ray photons in the sample and incomplete counts, which are events where not the full energy of the incident photon is detected, but only a fraction thereof, e.g. due to charge trapping or due to different drift velocities of created pairs of the photo electrons and holes in the X-ray detector section.

In contrast to conventional X-ray based imaging, PET and SPECT methods of nuclear medicine have no intrinsic background, because the measured photons can only come from the radio markers used. This is the reason why the sensitivity of PET/SPECT is incomparably high, and conventional X-ray based imaging, like CT imaging cannot match it. XRF could come close to the high sensitivity of PET/SPECT if the spectral background in the energy range of the fluorescence photons could be made to disappear, because then XRF would also be a background-free measurement.

A known approach for improving the sensitivity of XRF is selecting a spectral X-ray energy region being optimized for reducing scattering background. In preclinical XRF imaging, it has been proposed to employ X-rays in an X-ray energy region with typically low energies around 55 keV in order to minimize the scattering background in the signal region (see e.g. [1] or [2], for an energy of 53 keV). Apart from preclinical imaging, XRF imaging also can be used (especially at synchrotron facilities) for so-called single-cell XRF imaging, e.g. for investigating the uptake of labeled co-enzymes in individual biological cells (see e.g. [3] or [4]). Single-cell XRF tends to use X-ray energies around 10 keV.

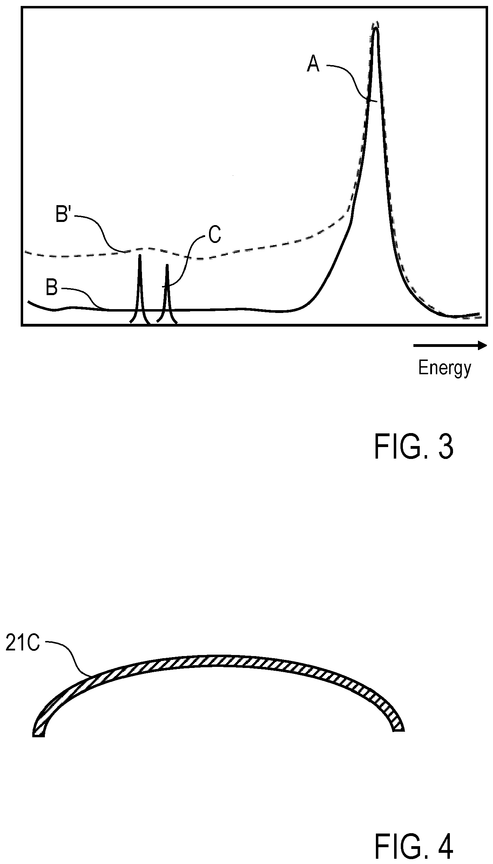

However, selecting an optimized spectral X-ray energy region has a limited sensitivity improving effect only. Typical X-ray spectra from both fields of application of XRF usually show a clear peak (A) due to single and multiple Compton scattering, a drop from this to lower energies, and then a pronounced background plateau (B') with almost constant height, until the spectrum may rise again towards the lowest energies (see schematic illustration in Figure 3, dashed line). As a main disadvantage, the fluorescence lines (C) to be sensed lie in the region of plateau (B') and thus the height of this plateau (B') sets the XRF detection limit: if the number of fluorescence photons from the local mass of XRF markers (and/or natural elements in single-cell imaging) is too low compared to the statistical noise of this plateau height, the XRF markers or elements are not detectable with prior art XRF imaging.

For an energy range below 20 keV, it has been found that background contributions in the spectra of detected X-ray photons are influenced by additional processes inherently included in the detection process ([5], [6]). So-called "incomplete counts" (incomplete charge collection) may occur, which are caused e.g. by photons arriving at an edge of the semiconductor detector material, so that the electron-hole pairs generated by them do not all find their way to the anode and a too low signal and correspondingly a too low energy is measured by mistake. For avoiding incomplete counts, multilayer collimators have been proposed which catch photons hitting the edge region. Furthermore, electrons may escape from the semiconductor detector material after X-ray photon absorption, in particular if the X-ray photon is absorbed sufficiently near a surface of the semiconductor detector. These escape electrons are described as being related to spectral peaks and steps in the spectra of detected X-ray photons [6]. Any technique for suppressing the escape electrons has not been disclosed in the past because escape electrons have been considered as being uncontrollable and creating only defined spectral peaks so far.

The sensitivity and background problem in prior art techniques for detecting X-ray photons does not occur in imaging applications only, but also with other applications of X-ray detection, e. g. for measuring purposes, diagnostic tasks or monitoring tasks.

### Objective of the invention

The objective of the invention is to provide an improved X-ray detector apparatus and X-ray detection method for detecting X-ray photons, being capable of avoiding limitations of conventional techniques. In particular, the X-ray apparatus and method are to be capable of detecting X-rays with improved sensitivity and/or reduced spectral background, in particular being matched to the sensitivity of PET and SPECT methods, and/or detecting X-ray sources, like XRF markers or elements, with less concentrations, e.g. in XRF imaging.

### Brief summary of the invention

The objective of the invention is solved by an X-ray detector apparatus and/or an X-ray detection method, comprising the features of the independent claims. Preferred embodiments and applications of the invention arise from the dependent claims.

According to a first general aspect of the invention, the above objective is solved by an X-ray detector apparatus, being configured for detecting incoming X-ray photons of X-ray radiation to be sensed, comprising an X-ray detector device having an X-ray detector section and an entrance section, wherein the X-ray detector section is arranged for detecting the X-ray photons incoming through the entrance section by creating photo electrons in response to an interaction of the incoming X-ray photons with the X-ray detector section and for providing an X-ray output signal, which is determined by the detected X-ray photons.

According to the invention, the X-ray detector apparatus further comprises a background suppression device being configured for suppressing background contributions in the X-ray output signal which are caused by at least one of escape electrons being emitted from the X-ray detector device in response to an absorption of the X-ray radiation and external electrons occurring outside the X-ray detector device.

According to a second general aspect of the invention, the above objective is solved by an X-ray detection method of detecting X-ray photons of X-ray radiation, comprising the steps of receiving the X-ray radiation with an X-ray detector device of an X-ray detector apparatus, wherein the X-ray detector device has an X-ray detector section and an entrance section, creating photo electrons in the X-ray detector section in response to an interaction of the X-ray detector section with the X-ray photons, and providing an X-ray output signal, wherein the X-ray output signal is determined by the detected X-ray photons.

According to the invention, the X-ray detection method comprises a step of suppressing background contributions to the X-ray output signal which are caused by at least one of escape electrons being emitted from the X-ray detector device in response to an absorption of the X-ray radiation and external electrons occurring outside the X-ray detector device. Preferably, the X-ray detection method or an embodiment thereof is executed with the X-ray detector apparatus of the first general aspect of the invention or an embodiment thereof.

Further general aspects comprise an X-ray fluorescence imaging apparatus and a method of using the X-ray detector apparatus of the first general aspect of the invention or an embodiment thereof and/or an X -ray detection method of the second general aspect of the invention or an embodiment thereof for X-ray fluorescence imaging of an object under investigation, e.g. a biological organism or a part thereof.

The X-ray detector device generally comprises a solid-state detector, in particular semiconductor detector, wherein the X-ray detector section (also called: detector chip) is made of a detector material being adapted for an absorption of X-ray photons, creation of photo electrons and internal, cascaded multiplication of the photo electrons, and being provided with a read-out electronic. An amplitude of a detector output (X-ray output signal) provided by the read-out electronic, is determined by, e.g. proportional to, the energy of the X-ray photons. The X-ray detector device may include a single X-ray detector section or multiple X-ray detector sections. In the latter case, the X-ray output signal may be provided by a superposition of the detector outputs of the X-ray detector sections. Furthermore, the X-ray detector device may comprise a detector housing (detector package) accommodating the X-ray detector section(s). The entrance section is a portion of the X-ray detector device on an irradiation side of the X-ray detector section(s). The entrance section is configured for receiving the X-ray radiation to be sensed along an irradiation direction, i.e. the entrance section is a portion of the X-ray detector device through which the X-ray radiation hits the X-ray detector section.

The X-ray detector apparatus may comprise a single X-ray detector device combined with a single background suppression device. Alternatively, the X-ray detector apparatus (pixelated X-ray detector apparatus) may comprise multiple X-ray detector devices (detector pixels), wherein the detector pixels may be combined with a single background suppression device, or each of the detector pixels may be combined with one of multiple background suppression devices.

The background suppression device generally comprises a component of the X-ray detector apparatus which is capable of providing the X-ray detector output signal with reduced or even without contributions caused by the escape electrons and/or the external electrons. Suppressing background contributions in the X-ray output signal comprises suppressing the initially sensed X-ray output signal if it is dominated by background contributions caused by the escape electrons and/or suppressing processes which create external electrons and cause background contributions in the X-ray output signal. In particular, suppressing background contributions includes reducing background contributions to a level allowing a detection of a marker fluorescence, e.g. for XRF imaging, or completely eliminating background contributions.

Suppressing background contributions in the X-ray output advantageously is independent of the energy, so that suppressing background contributions preferably may result in a broadband reduction of background signal contributions covering an energy range of at least 10 keV, preferably at least 20 or 30 keV or even more in a range below a simple and multiple Compton scattering peak caused by the X-ray radiation to be sensed. Accordingly, suppressing background contributions in the X-ray output signal is not restricted to single bands or steps in the X-ray spectrum.

The invention is based on the following findings by the inventors. Before the invention, it was assumed by experts that the background plateau portion in detected X-ray spectra cannot be avoided as a result of the inherent occurrence of multiple Compton scattering events. The inventors have executed extended simulations of the detection process with ideal detectors, which detect each incoming X-ray photon with the precise energy thereof. Resulting from these simulations and deviating from the above assumptions, the inventors have found that the background plateau portion in detected X-ray spectra is not primarily caused by multiple Compton scattering events, i.e. it is not created by photons, but by sensing of electrons occurring in the detection process and influencing the detection process.

With more details, the inventors have found two sources of contributions to the background plateau, comprising the escape electrons being emitted from the X-ray detector device and the external electrons occurring outside the X-ray detector device. Thus, the sources of background contributions comprise electrons generated inside the X-ray detector device and leaving it again (called escape electrons), or electrons hitting the X-ray detector device from outside.

The electrons hitting the X-ray detector device from outside are created by components of the X-ray detector apparatus other than the X-ray detector device, e.g. by the detector housing, wherein electrons knocked out of the other components, e. g. from the detector housing, by X-ray photons via Compton scattering or photo absorption can reach the X-ray detector device from the outside, thus creating noisy background signals with unspecific energy. Due to this generation process, these electrons from outside also may be understood as escaping electrons. While escape electrons are mentioned in [4] already, they always refer only to processes in the detector material itself, but not to interactions in the surrounding structures of the detectors.

Furthermore, the inventors have found that the electrons from surrounding components (e.g. detector housing) may outnumber the escape electrons from the X-ray detector device. Especially at the higher photon energies (> 20 keV), as preferred for preclinical X-ray fluorescence imaging, these electrons escaping e.g. from the housing are dominant. Another source of the electrons from outside may be provided by cosmic radiation and/or from ambient atmosphere, in particular air.

With a further step of the present invention, the inventors have found that the effect of these sources, i.e. background contributions to the X-ray output signal, can be suppressed. Therefore, as a main advantage of the invention, an X-ray detector apparatus provided with the background suppression device is capable of substantially reducing the background plateau portion in detected X-ray spectra. Background reduction is possible down to a limit allowing a reliable detection of the X-ray output signal to be sensed, in particular down to a neglectable background or even zero, so that the sensitivity of PET and SPECT methods can be reached in X-ray detection for the first time.

Advantageously, various configurations of the background suppression device are available, which are described in detail below. According to a first variant, the background suppression device is an active signal processor which is arranged for sorting currently measured X-ray detector output signals being influenced by the escape electrons and/or the external electrons, by employing a veto detector section as described below. Alternatively, or additionally, the background suppression device is a passive absorber which is arranged for absorbing X-ray photons which are capable of creating external electrons. Depending on the application of the invention, employing only the passive absorber may be sufficient for effective background suppression, in particular in an energy range above 20 keV, or employing only the active signal processor may be sufficient for effective background suppression, in particular if the escape electrons are dominant, or both of the passive absorber and the active signal processor can be combined. The latter embodiment has the advantage that the number or size of veto detector section(s) can be reduced as the number of potentially occurring external electrons is substantially reduced.

Thus, according to a preferred embodiment of the invention (in the following: first embodiment or active signal processor embodiment), the background suppression device may comprise a veto detector device having at least one veto detector section, which is arranged for detecting the escape and/or external electrons and for providing a veto output signal, which is determined by the detected escape and/or external electrons. With the first embodiment, the background suppression device further comprises a veto trigger control device being coupled with the X-ray detector section and the at least one veto detector section and being configured for controlling an output of the X-ray detector apparatus in dependency on the X-ray output signal and the veto output signal. The veto trigger control device may be configured for providing the X-ray output signal (e.g. triggering the output of the X-ray output signal), when each veto output signal is below a predetermined background magnitude or zero, and for providing no X-ray output signal, when at least one veto output signal of the at least one veto detector section is equal to or above the predetermined background magnitude.

In terms of the method, the first embodiment of the X-ray detection method preferably may comprise the steps of providing a veto detector device, wherein the veto detector device has at least one veto detector section, which is capable of detecting the escape and/or external electrons, providing a veto output signal at each veto detector section, wherein each veto output signal is determined by the escape and/or external electrons detected by the related veto detector section, and providing the X-ray output signal in dependency on the X-ray and veto output signals, wherein the X-ray output signal is provided as an output of the X-ray detector apparatus, when each veto output signal is below a predetermined background magnitude or zero, and no X-ray output signal is provided, when at least one veto output signal of the at least one veto detector section is equal to or above the predetermined background magnitude.

The inventors have found, that the escape electrons and/or the external electrons occur even when the originally entering X-ray photon is absorbed close to one of the surfaces of the X-ray detector section and/or at least one other component of the X-ray detector apparatus, like a housing wall, where external electrons may be created, because then the range of the electrons released by the photo electron is sufficient to be able to leave the X-ray detector section or the other component. If this event occurs, the X-ray detector device will not register the full energy of the incoming X-ray photon, but only a fraction, so that the background plateau of constant height is formed, and no X-ray output signal is provided. Thus, the X-ray detector apparatus is able to register the escape and/or external electrons and discard X-ray output signals temporally correlated with these events.

Accordingly, as long as not any veto output signal is equal to or above the predetermined background magnitude and an X-ray output signal is currently sensed at the X-ray detector section, it is determined that the current X-ray output signal does not include background contributions. In other words, with all veto output signals being below the predetermined background magnitude, it is determined that no escape electrons and no external electrons are generated, so that the acquired X-ray output signal cannot be influenced by them. Accordingly, the output signal of the X-ray detector apparatus is obtained based on the current X-ray output signal. Providing the X-ray output signal may comprise a direct output of the X-ray output signal or creating a detector apparatus output signal based on the X-ray output signal, i.e. the output signal of the X-ray detector apparatus may be obtained by a further processing of the initially sensed X-ray output signal.

Otherwise, when the at least one veto detector section creates a veto output signal equal to or above the predetermined background magnitude and an X-ray output signal is simultaneously sensed at the X-ray detector section, it is determined that the current X-ray output signal includes background contributions, and the current X-ray output signal is discarded. Advantageously, by discarding all X-ray output signals including background contributions, a background-free output of the X-ray detector apparatus may be obtained.

The at least one veto detector section preferably is arranged side by side adjacent to the X-ray detector section and/or the at least one other component of the X-ray detector apparatus. A distance between the at least one veto detector section and the X-ray detector section and/or at least one other component is selected such that the at least one veto detector section is capable of collecting the escape electrons and/or external electrons. Due to this side-by-side arrangement, the X-ray detector apparatus is called a veto embedded detector (or: trigger embedded detector, TED).

The veto detector device generally may comprise a solid-state electron detector, in particular semiconductor detector, wherein the veto detector section may be made of a detector material being configured for collecting and sensing electrons and being coupled with a read-out electronic. An amplitude of a veto detector output signal, provided by the read-out electronic, is determined by, e.g. proportional to, the number of electrons sensed. The veto detector device may include a single veto detector section or multiple veto detector sections.

Preferably, the at least one veto detector section may be arranged on an irradiation side of the X-ray detector section, e.g. in the entrance section of the X-ray detector device. In particular, the veto detector device may comprise a single veto detector section only, which is arranged on the irradiation side of the X-ray detector section. Accordingly, the escape electrons and/or the external electrons are preferably detected on the irradiation side of the X-ray detector section. Advantageously, most of the escape electrons are created within the X-ray detector section near the irradiated surface thereof, so that collecting the escape electrons on the irradiation side allows the detection of most of the background events. Detecting the external electrons on the irradiation side of the X-ray detector section has a corresponding advantage in terms of acquiring most of the background events created by external electrons.

Alternatively, the veto detector device may comprise multiple veto detector sections being arranged on multiple sides of the X-ray detector section. In terms of the method, the escape electrons and/or the external electrons are detected on multiple sides of the X-ray detector section. Advantageously, this embodiment allows acquiring all or nearly all of the background events created by the escape electrons and/or the external electrons.

According to further preferred variants of the invention, the at least one veto detector section may have a plane plate shape or curved shape. The plane plate shape may have advantages in terms of arranging the veto detector section adjacent to a plane surface of the X-ray detector section. With the curved shape, e. g. a partially spherical shape, surrounding the X-ray detector section by the at least one veto detector section may be improved. The curved shape may comprise any shape, in particular being selected in dependency on the application conditions of the X-ray detector apparatus.

Preferably, a material and/or a thickness of the at least one veto detector section may be selected, e. g. based on reference data, numerical simulations or experimental tests, for mainly transmitting the X-ray radiation to be sensed. Particularly preferred, at least 80 %, e. g. at least 90 %, of the X-ray radiation is transmitted. Advantageously, even with the arrangement of the at least one veto detector section on the irradiation side of the X-ray detector section, sufficient X-ray radiation can be sensed with the X-ray detector device.

According to a further variant of the invention, the at least one veto detector section may have a lateral dimension which is larger than a lateral dimension of the X-ray detector section. In particular, a surface area of a veto detector section completely covers a surface area of an adjacent X-ray detector section. Advantageously, the reliability of detecting background events may be improved with this embodiment.

According to a further preferred embodiment of the invention, the at least one veto detector section may comprise a detector layer, preferably a plane detector layer, with a thickness below a thickness of the X-ray detector section. Thus, as a further advantage of the active signal processing embodiment, the inventors preferably employ the following characteristic of semiconductor detectors. In contrast to photons, all common semiconductor detectors have an almost 100% detection probability for electrons, therefore they can be built much thinner than the X-ray detector section and thus do not interfere with the incoming photons. Preferably, the thickness of the detector layer of the veto detector section is selected such that the photon detection efficiency of the detector layer is considerably lower than the one of the embedded X-ray detector section, as the veto detector should mainly detect only electrons, while providing mostly perfect transmission for photons.

Further advantages of the invention are obtained from the availability of different detector materials, which can be selected in particular in dependency on the application conditions of the invention. The inventors have found that escape electrons may occur independently of the detector material and/or energy of incoming X-ray photons. Preferably, the X-ray detector section may comprise at least one of silicon (Si), germanium (Ge), cadmium telluride (CdTe), gallium arsenide (GaAs) and carbon (C). Alternatively, or additionally, the at least one veto detector section preferably comprises, but is not limited to Si.

According to a particularly preferred embodiment of the invention, the veto detector device may comprises two veto detector sections (e.g. having the plane plate shape or curved shape and being arranged in parallel to each other, in particular with a constant mutual distance), wherein the X-ray detector section is arranged between the veto detector sections, in particular along the irradiation direction. Advantageously, nearly all spatial directions around the X-ray detector section are covered by the two veto detector sections with this embodiment, so that a high efficiency of background event detection can be obtained with a relatively simple arrangement of the veto detector sections.

Advantageously, the X-ray detector apparatus may comprise a collimator device and an X-ray entrance window defining the entrance opening of the X-ray detector section and being arranged in front of the veto detector device. Accordingly, the incoming X-ray radiation may be guided in an efficient manner on the irradiation side of the X-ray detector section.

According to a further advantageous embodiment of the invention, the veto detector device and/or the veto trigger control device may be configured with an operation mode wherein the X-ray output signal is provided based on the X-ray output signal independently of the veto output signal. In terms of the method, an operation mode may be set wherein the X-ray output signal is provided independently of the veto output signal. Accordingly, the X-ray detector apparatus may be switched between a background suppression mode, wherein the veto trigger control device is operated, and a background mode, wherein the veto trigger control device is not operated (switched off). Employing the background mode may have advantages in case of detecting high intensity X-ray radiation with relatively weak background, in particular being neglectable in terms of signal detection, and/or for monitoring and diagnostic purposes.

According to the first embodiment of the invention, the veto trigger control device may be operated in dependency on the occurrence of veto output signal(s). A background event is excluded if all veto output signals are below a predetermined background magnitude or zero. Accordingly, even if the veto detector device detects some escape and/or external electrons and there is a non-zero veto output signal, the detected event is not counted by the veto trigger control device if the non-zero veto output signal still is below the predetermined background magnitude. The background magnitude may be selected in dependency on application conditions of the X-ray detector apparatus, e. g. based on reference data, numerical simulations or experimental tests. The background magnitude may be selected such that the X-ray output signal to be obtained can be measured with a sufficiently small level of noise. In particular, the background magnitude may be selected such that the X-ray output signal is larger than statistical fluctuation (noise) of the background.

Optionally, the veto trigger control device may be configured for an adaptive control of the background magnitude in dependency on amplitudes of the X-ray and/or veto output signals. In particular, if the amplitudes of the veto output signals are relatively low, the background magnitude may be reduced as well. Advantageously, this allows an acceleration of the X-ray detection when the background level is low. A control loop may be provided wherein the amplitudes of the X-ray and/or veto output signals are sensed and compared with target values, and the background magnitude is set in dependency on a deviation of the sensed amplitudes from the target values.

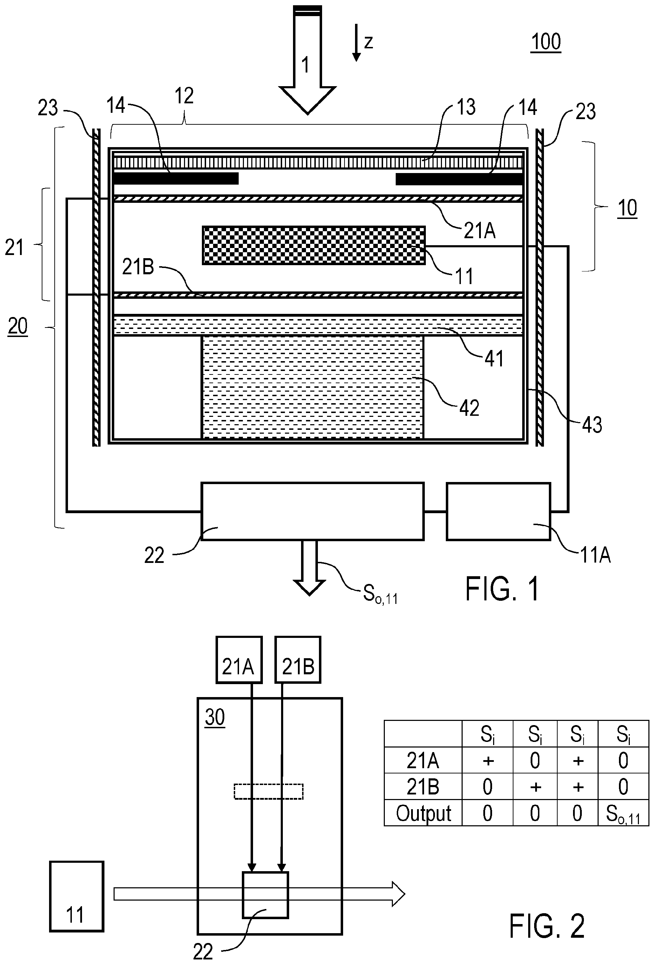

As both of the X-ray detector section and the veto detector section(s) may be configured for sensing X-rays or electrons, e.g. by making both of Si, the function of the X-ray detector section and the veto detector section(s), in particular as shown in attached Figure 1 may be reversed, i. e. the detector chip may be employed as a veto detector section and the veto detector sections may be used for X-ray detection.

According to a further preferred embodiment of the invention (in the following: second embodiment or passive absorber embodiment), the background suppression device may comprise a shielding casing enclosing the X-ray detector device, preferably the X-ray detector device and the veto detector device, except of at least the entrance section thereof and being made of an X-ray photon absorbing casing material, which suppresses an emission of electrons. In terms of the method, the background suppressing step may comprise a step of absorbing X-ray photons with a shielding casing enclosing the X-ray detector device except of at least the entrance section thereof and being made of an X-ray photon absorbing casing material, which suppresses an emission of electrons.

Advantageously, the inventors have found that the external electrons already can be reduced very efficiently with the passive embedding provided by the shielding casing. The shielding casing is provided additionally to the detector housing of the X-ray detector device. The entire detector housing of the X-ray detector device (except of the entrance section) may be enclosed with a material absorbing X-ray photons, but suppressing escaping external electrons. The material choice and thickness can be found by numerical simulations.

Particularly preferred, the shielding casing may enclose the X-ray detector device, preferably the X-ray detector device and the veto detector device, except of the entrance section and a backside of the X-ray detector device opposite to the irradiation side. Accordingly, the shielding casing may have a sleeve shape covering the X-ray detector device in transversal directions perpendicular to the irradiation direction, preferably completely surrounding the X-ray detector device in the transversal directions, and being open towards the irradiation side and the backside of the X-ray detector device.

Preferably, the shielding casing may be made of at least one of Pb, W, Mo and an element with an atomic number matched to the atomic number of Pb, W or Mo, in particular a composition (e.g alloy) of W, Ni and Fe, like an alloy of W, Ni and Fe called "Densimet" (tradename), or another wall material having a density like Densimet. Additionally, or alternatively, the shielding casing may have a casing wall with a thickness above 1 mm. A thickness of the shielding casing wall may be selected e.g. in a range from 1 mm to 4 mm. With increased energies, even a larger thickness may be employed.

According to a further preferred variant of the passive absorber embodiment, the shielding casing may limit the paths of the incoming photons to only a detector volume of the X-ray detector section in which the photons are detected without incomplete counts caused by incomplete charge collection, e.g. due to different drift velocities of created pairs of the photo electrons and holes in the X-ray detector section. Advantageously, the shielding casing may be used for masking the X-ray detector device on the irradiation side thereof, so that the occurrence of incomplete counts is avoided.

According to the invention, multiple X-ray detector apparatuses may be combined as an array, e. g. as a line array or as a matrix array, for providing an X-ray fluorescence imaging apparatus for spectrally and spatially resolved simultaneous detection of X-ray radiation from a sample under investigation. The X-ray fluorescence imaging apparatus may be considered as an independent subject of the invention.

### Brief description of the drawings

Further details and advantages of the invention are described in the following with reference to the attached drawings, which show in:
- Figure 1:: a schematic cross-sectional overview illustrating preferred features of embodiments of an X-ray detector apparatus according to the invention;
- Figure 2:: a further illustration of the function of the veto detector device;
- Figure 3:: an exemplary illustration of a background suppression according to the invention; and
- Figure 4:: an example of a veto detector section with a curved shape.

### Preferred embodiments of the invention

Preferred embodiments of the invention are described in the following with exemplary reference to an X-ray detector apparatus combining both of the active signal processor embodiment and the passive absorber embodiment. It is noted that the invention is not restricted to this feature combination, but can be implemented with the features of the active signal processor embodiment only or the features of the passive absorber embodiment only. In particular, the invention is described with reference to the components allowing the provision of an output signal with reduced or completely eliminated background. Details of the X-ray detector apparatus, like e.g. details of the X-ray detector section or the read-out electronic thereof, the casing of the X-ray detector apparatus, the collimator device and/or the X-ray entrance window, are not described as far as they are known per se from conventional techniques, e. g. from the X-ray detector of the type FAST SDD detector (manufacturer: Amptek Inc, MA, USA).

Figure 1 schematically illustrates the X-ray detector apparatus 100 for detecting X-ray photons of X-ray radiation 1 to be sensed, in particular the so-called header of the X-ray detector apparatus 100. The X-ray detector apparatus 100 comprises an X-ray detector device 10 with the X-ray detector section 11 and a background suppression device 20 with the veto detector sections 21A, 21B and the shielding casing 23. The X-ray detector section 11 is arranged for receiving X-ray photons of the X-ray radiation 1 to be sensed at an irradiation side of the X-ray detector apparatus 100. The X-ray radiation 1 has an irradiation direction (z-direction). The X-ray detector section 11 and the veto detector sections 21A, 21B preferably have a lateral extension perpendicular to the irradiation direction.

Parts of the X-ray detector apparatus 100 are shown in Figure 1 separated from each other mainly for clarity reasons. In practice, it is possible, but not necessary to arrange for instance the X-ray detector section 11 and the veto detector sections 21A, 21B with distances therebetween. Alternatively, at least some of the parts, preferably all parts of the X-ray detector apparatus 100 may be arranged directly adjacent to each other in a stacked fashion and without spacings therebetween.

The X-ray detector section 11 and the veto detector sections 21A, 21B are supported by a substrate 41, which may be arranged in thermal contact, preferably in direct mechanical contact with a cooling device 42, like e.g. a thermoelectric cooler. Except of the shielding casing 23, the parts of the X-ray detector apparatus 100 are encapsulated in a detector casing 43, made of e.g. Ni with a thickness of e.g. 0.25 mm.

With more details, the X-ray detector section 11 of the X-ray detector device 10 comprises a plane detector chip of a detector material, like e.g. Si or Ge with a thickness of e.g. 1 mm and a lateral area of e.g. 0.5 cm². The X-ray detector section 11 is provided with a read-out electronic 11A. At an output of the X-ray detector section 11, in particular of the read-out electronic 11A, an X-ray output signal is created in response to X-ray photon or electron absorptions in the detector chip. Depending on the output of the veto detector sections 21A, 21B, the X-ray output signal is provided as the output of the X-ray detector apparatus 100, as outlined below.

At the irradiation side of the X-ray detector apparatus 100, an entrance section 12 is provided, which comprises an X-ray entrance window 13 and a collimator device 14. The X-ray entrance window 13 is a plate made of Beryllium with a thickness of 12.5 µm. With the collimator device 14, an X-ray receiving window is formed. To this end and for avoiding incomplete charge collection with the detector chip, the collimator device 14 is made of X-ray absorbing material, e.g. W, Cr, Ti, Al with a thickness of e.g. 15 to 100 µm and a window with a lateral extension (perpendicular to the irradiation direction) smaller than the extension of the X-ray detector section 11. In particular, an overlap between the collimator device 14 and the X-ray detector section 11 is provided.

The veto detector device 21 of the background suppression device 20 comprises the two veto detector sections 21A, 21B being configured e.g. by plane plates, made of e.g. Si, with a thickness smaller than the thickness of the X-ray detector section 11, e.g. 20 µm. The veto detector sections 21A, 21B are arranged parallel to each other with a mutual distance on opposite sides of the X-ray detector section 11. Both veto detector sections 21A, 21B are provided with read-out electronics (not shown) being coupled with the veto trigger control device 22. At the outputs of the veto detector sections 21A, 21B, in particular of the read-out electronic thereof, veto output signals are created in response to electron absorptions in the veto detector sections 21A, 21B. Depending on the temporal correlation of the veto output signals with the X-ray output signal, the X-ray output signal is provided as the output of the X-ray detector apparatus 100 or not, as outlined below.

As an alternative to the plane shapes of the veto detector sections 21A, 21B of the veto detector device 21, the veto detector sections may have a curved shape as schematically illustrated with the veto detector section 21C in Figure 4.

The veto trigger control device 22 is a computer circuit controlling the output of the X-ray detector apparatus 100. The veto trigger control device 22 may be integrated in a main control device 30 of the X-ray detector apparatus 100, as schematically illustrated in Figure 2. Alternatively, the veto trigger control device 22 may be provided as a separate control unit.

Furthermore, the background suppression device 20 may comprise the shielding casing 23, which encloses at least the X-ray detector device 10 and the veto detector sections 21A, 21B, preferably all remaining parts of the X-ray detector apparatus 100 except of the entrance section 12 thereof. The shielding casing 23 may comprise a box with an open side on the irradiation side, and it may be made of "Densimet" (tradename), in particular including more than 90 vol% W with a thickness of 3 mm.

The X-ray detector apparatus 100 is operated for detecting X-ray photons of the X-ray radiation 1 with reduced or eliminated background as follows. The X-ray radiation 1 is received with the X-ray detector device 10. Photo electrons are created in the X-ray detector section 11 in response to an interaction of the X-ray detector section 11 with the X-ray photons. The number of photo electrons is increased through a cascade multiplication in the detector material by a factor being determined by the spectral energy of the X-ray photons. Accordingly, the amplitude of the X-ray output signal of the X-ray detector section 11 is determined by the spectral energy of the detected X-ray photons.

Simultaneously with the creation of photo electrons, electrons may leave the detector chip as escape electrons. The escape electrons change the X-ray output signal as the number of electrons sensed by the read-out electronic 11A is reduced, thus representing a detection event with a seemingly reduced energy. In particular these events are eliminated with the active signal processor embodiment.

According to the active signal processor embodiment, the escape electrons are detected by at least one of the veto detector sections 21A, 21B, which create a veto output signal in response to an absorption of escape electrons. With the veto trigger control device 22, the occurrence of veto output signals is temporally correlated with the occurrence of the X-ray output signal. To this end, a predetermined correlation time window, e.g. an integration time of the detector sections, is monitored. If both of at least one veto output signal and the X-ray output signal are sensed in the correlation time window, e.g. with a duration of around 4 µs, the X-ray output signal is blocked as it is classified as being changed by the occurrence of escape electrons and thus being determined by background to be eliminated. When no substantial veto output signal is sensed in the correlation time window including the X-ray output signal, the X-ray output signal is provided as the output Sₒ,₁₁ of the X-ray detector apparatus 100.

The veto output signal(s) is/are considered as occurring or not occurring in the correlation time window if the amplitude(s) of the signal(s) is/are equal to or above or below a predetermined background magnitude. By defining the background magnitude, it is possible to pass the X-ray output signal to the output of the X-ray detector apparatus 100 even if there is a small, but acceptable background contribution. The background magnitude can be set in dependency on the application conditions, e.g. the amplitude of the X-ray output signals sensed and/or number of escape electrons expected.

As a result, with the use of the two veto detector sections 21A, 21B, the veto trigger control device 22 is operated like a logical NOR gate, which provides an output (the X-ray output signal S_{o,11}) only if both veto output signals are below the background magnitude, as shown in Figure 2.

The veto detector sections 21A, 21B do not respond to escape electrons only, but also to the occurrence of external electrons occurring outside the X-ray detector device 10, e.g. by the absorption of X-ray radiation in other parts of the X-ray detector apparatus 100 and/or as a result of cosmic radiation. The external electrons also may create background contributions by absorption in the X-ray detector section 11. Through the detection of external electrons with the veto detector section 21A, 21B, events of creating bursts of external electrons are determined. The veto output signals caused by the external electrons also can be used for eliminating the corresponding background contributions in the output of the X-ray output signal.

Additionally, with the passive absorber embodiment, the occurrence of external electrons, in particular external electrons, which hit the X-ray detector apparatus 100 from lateral sides, is suppressed by the shielding casing 23, so that less events of sensed X-ray output signals are blocked and the X-ray output signal provided by the X-ray detector apparatus 100 has reduced background contributions.

The function of the veto trigger control device 22 may be switched off by deactivating the veto trigger control device 22 or by setting the background magnitude to a level so that not any veto output signal is used by the veto trigger control device 22 for blocking the X-ray output signal.

The effect of the background suppression is schematically illustrated with the experimental result shown in Figure 3, which illustrates the X-ray output signal (e. g. counts of events) in dependency on energy. Curve B' represents the conventional measurement showing the plateau section at energies below the peak A due to single and multiple Compton scattering. With the plateau section, the X-ray output signals C to be sensed cannot be measured. According to the invention, background events causing the plateau section are eliminated or suppressed, so that the plateau section is substantially reduced and the X-ray output signals C are sensed with sufficient discrimination over the background. It is noted that Figure 3 represents a schematic illustration only. In practical measurements, the peak A may be broader compared with the extension of the plateau section B'.

In summary, if X-ray photons hit the e.g. detector casing 43 and/or the X-ray detector section 11, the photoionization electrons may leave the material (i.e., the housing as well as the chip) and therefore the X-ray detector section 11 either incorrectly registers these electrons from the housing as photons (which accounts for the spectral background) or electrons leave the chip and therefore the X-ray detector section 11 measures a lower energy than that of the absorbed photon (which also contributes to the spectral background). However, the veto trigger control device 22 triggers on both sorts of electrons and so would discard these events - so these "false positives" of energy are not recorded in the spectrum and one preferably only measures pure X-ray photon events, which is why the corrected spectrum no longer contains a spectral background in the X-ray fluorescence imaging signal region of Figure 3. Accordingly, removing false (photon) energy entries into the spectrum by rejecting escape and/or external electrons leads to a significant reduction of the final background plateau (B) compared to the non-corrected one (B'), thus increasing the detection sensitivity of the fluorescence lines (C).

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the subclaims independently of the features and claims to which they refer.

## Claims

1. X-ray detector apparatus (100), being configured for detecting incoming X-ray photons of X-ray radiation (1) to be sensed, comprising
- an X-ray detector device (10) having an X-ray detector section (11) and an entrance section (12), wherein the X-ray detector section (11) is arranged for detecting the X-ray photons incoming through the entrance section (12) by creating photo electrons in response to an interaction of the incoming X-ray photons with the X-ray detector section (11) and for providing an X-ray output signal, which is determined by the detected X-ray photons,
**characterized by**
- a background suppression device (20) being configured for suppressing background contributions in the X-ray output signal which are caused by at least one of escape electrons being emitted from the X-ray detector device (10) in response to an absorption of the X-ray radiation (1) and external electrons occurring outside the X-ray detector device (10).

2. X-ray detector apparatus according to claim 1, wherein the background suppression device (20) comprises
- a veto detector device (21) having at least one veto detector section (21A, 21B), which is arranged for detecting the escape electrons and/or the external electrons and for providing a veto output signal, which is determined by the detected escape and/or external electrons, and
- a veto trigger control device (22) being coupled with the X-ray detector section (11) and the at least one veto detector section (21A, 21B) and being configured for controlling an output of the X-ray output signal in dependency on the veto output signal, wherein
- the veto trigger control device (22) is configured for providing the X-ray output signal, when each veto output signal is below a predetermined background magnitude or zero, and for providing no X-ray output signal, when at least one veto output signal of the at least one veto detector section (21A, 21B) is equal to or above the predetermined background magnitude.

3. X-ray detector apparatus according to claim 2, wherein
- the at least one veto detector section (21A, 21B) is arranged on an irradiation side of the X-ray detector section (11).

4. X-ray detector apparatus according to one of the claims 2 to 3, wherein
- the veto detector device (21) comprises multiple veto detector sections (21A, 21B) being arranged on multiple sides of the X-ray detector section (11).

5. X-ray detector apparatus according to one of the claims 2 to 4, comprising at least one of the features
- the at least one veto detector section (21A, 21B) has a plane plate shape,
- the at least one veto detector section (21A, 21B) has a curved shape,
- a material and/or a thickness of the at least one veto detector section (21A, 21B) is selected for mainly transmitting the X-ray radiation (1) to be sensed, and
- the at least one veto detector section (21A, 21B) has a lateral dimension which is larger than a lateral dimension of the X-ray detector section (11).

6. X-ray detector apparatus according to one of the claims 2 to 5, wherein
- the at least one veto detector section (21A, 21B) comprises a detector layer with a thickness below a thickness of the X-ray detector section (11).

7. X-ray detector apparatus according to one of the claims 2 to 6, comprising at least one of the features
- the X-ray detector section (11) comprises at least one of Si, Ge, CdTe, GaAs and C, and
- the at least one veto detector section (21A, 21B) comprises Si.

8. X-ray detector apparatus according to one of the claims 2 to 7, wherein
- the veto detector device (21) comprises two veto detector sections (21A, 21B), and
- the X-ray detector section (11) is arranged between the veto detector sections (21A, 21B).

9. X-ray detector apparatus according to one of the claims 2 to 8, wherein
- the entrance section (12) comprises an X-ray entrance window (13) and a collimator device (14), which are arranged in front of the veto detector device (21).

10. X-ray detector apparatus according to one of the claims 2 to 9, wherein
- the veto detector device (21) and/or the veto trigger control device (22) is configured with an operation mode wherein the X-ray output signal is provided based on the X-ray output signal independently of the veto output signal.

11. X-ray detector apparatus according to one of the claims 2 to 10, wherein
- the veto trigger control device (22) is adapted for an adaptive control of the background magnitude in dependency on amplitudes of the X-ray and/or veto output signals.

12. X-ray detector apparatus according to one of the foregoing claims, wherein the background suppression device (20) comprises
- a shielding casing (23) enclosing the X-ray detector device (10) except of the entrance section thereof and being made of an X-ray photons absorbing casing material, which suppresses an emission of electrons.

13. X-ray detector apparatus according to claim 12, wherein the electron absorption casing has at least one of the features
- the shielding casing (23) includes at least one of Pb, W, Mo, and an element with an atomic number matched to the atomic number of Pb, W or Mo, in particular a composition of W, Ni and Fe,
- the shielding casing (23) has a casing wall with a thickness above 1 mm.
- the shielding casing (23) limits the paths of the incoming photons to only a detector volume of the X-ray detector section (11) in which the photons are detected without incomplete counts caused by incomplete charge collection due to different drift velocities of created pairs of the photo electrons and holes in the X-ray detector section (11).

14. X-ray detection method of detecting X-ray photons of X-ray radiation (1), comprising the steps of
- receiving the X-ray radiation (1) with an X-ray detector device (10) of an X-ray detector apparatus (100), wherein the X-ray detector device (10) has an X-ray detector section (11) and an entrance section (12),
- creating photo electrons in the X-ray detector section (11) in response to an interaction of the X-ray detector section (11) with the X-ray photons, and
- providing an X-ray output signal, wherein the X-ray output signal is determined by the detected X-ray photons,
**characterized by** the step of
- suppressing background contributions in the X-ray output signal which are caused by at least one of escape electrons being emitted from the X-ray detector device (10) in response to an absorption of the X-ray radiation (1) and external electrons occurring outside the X-ray detector device (10).

15. X-ray detection method according to claim 14, the background suppressing step comprises
- providing a veto detector device (21), wherein the veto detector device (21) has at least one veto detector section (21A, 21B), which is capable of detecting the escape electrons and/or the external electrons,
- providing a veto output signal at each veto detector section (21A, 21B), wherein each veto output signal is determined by the escape electrons and/or the external electrons detected by the related veto detector section (21A, 21B), and
- providing the X-ray output signal in dependency on the veto output signal, wherein the X-ray output signal is provided, when each veto output signal is below a predetermined background magnitude or zero, and no X-ray output signal is provided, when at least one veto output signal of the at least one veto detector section (21A, 21B) is equal to or above the predetermined background magnitude.

16. X-ray detection method according to claim 15, comprising a step of
- setting an operation mode wherein the X-ray output signal is provided based on the X-ray output signal independently of the veto output signal.

17. X-ray detection method according to one of the claims 15 to 16, comprising a step of
- adaptive control of the background magnitude in dependency on amplitudes of the X-ray and/or veto output signals.

18. X-ray detection method according to one of the claims 15 to 17, wherein
- the escape electrons and/or the external electrons are detected on an irradiation side of the X-ray detector section (11), and/or
- the escape electrons and/or the external electrons are detected on multiple sides of the X-ray detector section (11).

19. X-ray detection method according to one of the claims 14 to 18, wherein the background suppressing step comprises
- absorbing X-ray photons with a shielding casing (23) enclosing the X-ray detector device (10) except of the entrance section thereof and being made of an X-ray photons absorbing casing material, which suppresses an emission of electrons.

20. Method of using the X-ray detector apparatus (100) according to one of the claims 1 to 13 or an X-ray detection method according to one of the claims 14 to 19 for X-ray fluorescence imaging of an object under investigation.
